(19)

**Europäisches Patentamt**
**European Patent Office**
**Office européen des brevets**

(11) **EP 4 538 921 A1**

(12) **EUROPEAN PATENT APPLICATION**

(43) Date of publication:
**16.04.2025 Bulletin 2025/16**

(21) Application number: **24194766.2**

(22) Date of filing: **15.08.2024**

(51) International Patent Classification (IPC):
**G06F 30/20** $^{(2020.01)}$      **G01K 7/42** $^{(2006.01)}$
**G06F 113/08** $^{(2020.01)}$      **G06F 119/08** $^{(2020.01)}$

(52) Cooperative Patent Classification (CPC):
**G06F 30/20;** G01K 7/427; G01K 2213/00;
G06F 2111/10; G06F 2113/08; G06F 2119/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 KR 20230135875**

(71) Applicant: **Korea Institute of Ocean Science Technology**
**Busan 49111 (KR)**

(72) Inventors:
• **LEE, Moonjin**
  **DAEJEON 3403 (KR)**
• **KIM, Tae Sung**
  **DAEJEON 35209 (KR)**
• **KIM, Yong Myung**
  **DAEJEON 34847 (KR)**

(74) Representative: **EP&C**
**P.O. Box 3241**
**2280 GE Rijswijk (NL)**

(54) **APPARATUS AND METHOD FOR DETERMINING WATER TEMPERATURE AT RANDOM WATER DEPTH USING SEAWATER TEMPERATURE VERTICAL DISTRIBUTION STRATUM SIMULATION MODEL**

(57)     Disclosed is an apparatus and method for determining water temperature at a random water depth using a seawater temperature vertical distribution stratum simulation model. The method for determining water temperature at a random water depth using a seawater temperature vertical distribution stratum simulation model includes generating a four-layer model for seawater temperature vertical distribution, setting a maximum water depth for each layer in the generated four-layer model, generating water temperature data at equal water depth intervals by processing ocean observation data, calculating a vertical gradient of water temperatures for water depths of each layer in the four-layer model by using the generated water temperature data at equal water depth intervals, calculating a water temperature at the maximum water depth of each layer by using the set maximum water depth of each layer and the calculated vertical gradient, and calculating a model water temperature at a random water depth by using the set maximum water depth of each layer, the calculated vertical gradient, and the water temperature at the maximum water depth of each layer.

FIG. 1

```
Generating a four-layer model for
seawater temperature vertical distribution      ──S110
                    │
                    ▼
Setting a maximum water depth for each layer    ──S120
                    │
                    ▼
Generating water temperature data at equal
water depth intervals                           ──S130
                    │
                    ▼
Calculating a vertical gradient of
water temperatures for each layer               ──S140
                    │
                    ▼
Calculating a water temperature
at the maximum water depth of each layer        ──S150
                    │
                    ▼
Calculating a water temperature
at a random water depth                         ──S160
                    │
                    ▼
Determining an optimal maximum
water depth for each layer                      ──S170
```

**Description**

CROSS REFERENCE TO RELATED APPLICATION

The present application claims priority to Korean Patent Application No. 10-2023-0135875, filed October 12, 2023, the entire contents of which are incorporated herein for all purposes by this reference.

BACKGROUND

Technical Field

The present disclosure relates to an apparatus and method for determining water temperature at a random water depth using a seawater temperature vertical distribution stratum simulation model.

Description of Related Technology

Seawater, which makes up about 70% of the Earth's surface, has a major impact on the weather that occurs on Earth and has a profound influence on marine and terrestrial ecosystems, humans, and so on. Thus, the observation and study of seawater is very important to people living on Earth.

In order to study seawater, it is necessary to observe the temperature, salinity, density, etc., of seawater. Here, the temperature of seawater shows a pattern that varies with depth, and seawater is generally divided into three layers according to the water temperature: the mixed layer, the thermocline, and the deep ocean layer. The mixed layer exhibits a relatively constant temperature as seawater is mixed by winds, the thermocline has a water temperature decreasing with depth because it is not affected by winds, and the deep ocean layer has a very low water temperature as the solar radiation energy does not reach it.

There is a need for the development of various research techniques by using observation data on such vertical distribution of seawater temperature.

Prior Art Literature

Patent Document

Korean Patent Application Publication No. 10-2023-0055765 (April 26, 2023.)

SUMMARY

The present disclosure is intended to provide an apparatus and method for determining water temperature at a random water depth using a seawater temperature vertical distribution stratum simulation model that generates a four-layer model for seawater temperature vertical distribution and calculates water temperatures at random water depths using the generated four-layer model.

According to one aspect of the present disclosure, a method for determining water temperature at a random water depth using a seawater temperature vertical distribution stratum simulation model performed by an apparatus for determining water temperature at a random water depth is disclosed.

A method for determining water temperature at a random water depth using a seawater temperature vertical distribution stratum simulation model in accordance with an embodiment of the present disclosure includes generating a four-layer model for seawater temperature vertical distribution, setting a maximum water depth for each layer in the generated four-layer model, generating water temperature data at equal water depth intervals by processing ocean observation data, calculating a vertical gradient of water temperatures for water depths of each layer in the four-layer model by using the generated water temperature data at equal water depth intervals, calculating a water temperature at the maximum water depth of each layer by using the set maximum water depth of each layer and the calculated vertical gradient, and calculating a model water temperature at a random water depth by using the set maximum water depth of each layer, the calculated vertical gradient, and the water temperature at the maximum water depth of each layer.

The four-layer model consists of four layers: a first layer that is a mixed layer, a second layer that is an upper thermocline, a third layer that is a lower thermocline, and a fourth layer that is a deep ocean layer.

The generating the water temperature data at equal water depth intervals generates the water temperature data at equal water depth intervals by linearly interpolating water temperature data observed for each standard water depth.

The calculating the vertical gradient calculates the vertical gradient of the water temperatures for the water depths of each layer of the four-layer model by using a method of calculating a slope and an intercept of a linear regression equation in a least squares method.

The calculating the water temperature at the maximum water depth of each layer calculates the water temperature at the maximum water depth of each layer by using the following equation:

$$T_1 = T_0 + G_1 \ d_1$$

$$T_2 = T_1 + G_2 \ (d_2 - d_1)$$

$$T_3 = T_2 + G_3 \ (d_3 - d_2)$$

$$T_4 = T_3 + G_4 \ (d_4 - d_3)$$

Here, $T_0$ is a sea surface water temperature (SST), $T_1$, $T_2$, $T_3$, and $T_4$ are water temperatures at maximum water depths of a first layer, a second layer, a third layer, and a fourth layer, respectively, $d_1$, $d_2$, $d_3$, and $d_4$ are the maximum water depths of the first layer, second layer, third layer, and fourth layer, respectively, and $G_1$, $G_2$, $G_3$, and $G_4$ are vertical gradients of water temperatures for water depths of the first layer, second layer, third layer, and fourth layer, respectively.

The calculating the model water temperature at the random water depth calculates a water temperature at a random water depth by using the following equation:

$$T^{(1)}(z) = T_0 + G_1 \ z$$

$$T^{(2)}(z) = T_1 + G_2 \ (z - d_1)$$

$$T^{(3)}(z) = T_2 + G_3 \ (z - d_2)$$

$$T^{(4)}(z) = T_3 + G_4 \ (z - d_3)$$

Here, $T^{(i)}(z)(i=1, 2, 3, 4)$ represents a model water temperature for a random water depth z, $T_0$ is a sea surface water temperature (SST), $T_1$, $T_2$, $T_3$, and $T_4$ are water temperatures at maximum water depths of a first layer, a second layer, a third layer, and a fourth layer, respectively, $d_1$, $d_2$, $d_3$, and $d_4$ are the maximum water depths of the first layer, second layer, third layer, and fourth layer, respectively, and $G_1$, $G_2$, $G_3$, and $G_4$ are vertical gradients of water temperatures for water depths of the first layer, second layer, third layer, and fourth layer, respectively.

The method for determining water temperature at a random water depth further includes determining an optimal maximum water depth of each layer by using the generated water temperature data at equal water depth intervals and the calculated water temperature at the random water depth.

The determining the optimal maximum water depth of each layer sets a maximum water depth of a fourth layer, which is a lowest layer of the four-layer model, to a maximum water depth of the water temperature data, shifts water depth values set as maximum water depths of a first layer, a second layer, and a third layer of the four-layer model by preset $-\Delta z$, 0, and $\Delta z$, respectively, calculates RMS (root mean squares) errors between model water temperatures corresponding to the shifted water depth values and observed water temperatures of the water temperature data, selects water depth values with a smallest RMS error, and updates the water depth values set as the maximum water depths of the first layer, second layer, and third layer to the selected water depth values.

According to another aspect of the present disclosure, an apparatus for determining water temperature at a random water depth using a seawater temperature vertical distribution stratum simulation model is disclosed.

An apparatus for determining water temperature at a random water depth using a seawater temperature vertical distribution stratum simulation model in accordance with an embodiment of the present disclosure includes a memory configured to store instructions and a processor configured to execute the instructions, wherein the instructions perform a method for determining water temperature at a random water depth, the method including generating a four-layer model for seawater temperature vertical distribution, setting a maximum water depth for each layer in the generated four-layer model, generating water temperature data at equal water depth intervals by processing ocean observation data,

calculating a vertical gradient of water temperatures for water depths of each layer in the four-layer model by using the generated water temperature data at equal water depth intervals, calculating a water temperature at the maximum water depth of each layer by using the set maximum water depth of each layer and the calculated vertical gradient, and calculating a model water temperature at a random water depth by using the set maximum water depth of each layer, the calculated vertical gradient, and the water temperature at the maximum water depth of each layer.

The apparatus and method for determining water temperature at a random water depth using a seawater temperature vertical distribution stratum simulation model in accordance with the embodiments of the present disclosure can not only compress the vertical distribution data of observed seawater temperature, but also be applied in a variety of ways to determining the thickness of the mixed layer, determining the thickness and strength of the thermocline, etc., and can also be used in studies to infer the internal water temperature structure from the average value and horizontal variation data of the surface water temperature distribution by generating a four-layer model for seawater temperature vertical distribution and calculating water temperatures at random water depths using the generated four-layer model.

BRIEF DESCRIPTION OF THE DRAWINGS

FIG. 1 is a flowchart schematically illustrating a method for determining water temperature at a random water depth using a seawater temperature vertical distribution stratum simulation model performed by an apparatus for determining water temperature at a random water depth in accordance with an embodiment of the present disclosure;

FIG. 2 is a diagram for describing the method for determining water temperature at a random water depth using a seawater temperature vertical distribution stratum simulation model in accordance with the embodiment of the present disclosure in FIG. 1; and

FIG. 3 is a diagram schematically illustrating the configuration of an apparatus for determining water temperature at a random water depth using a seawater temperature vertical distribution stratum simulation model in accordance with an embodiment of the present disclosure.

DETAILED DESCRIPTION

As used herein, singular expressions include plural expressions unless the context clearly dictates otherwise. In the present specification, terms such as "comprise" or "include" should not be construed as necessarily including all of the various components or steps described herein, but should be construed in such a way that some of the components or steps may not be included or additional components or steps may be further included. In addition, terms such as "... part" and "module" described herein refer to a unit that processes at least one function or operation, which may be implemented in hardware or software, or in a combination of hardware and software.

Hereinafter, various embodiments of the present disclosure will be described in detail with reference to the accompanying drawings.

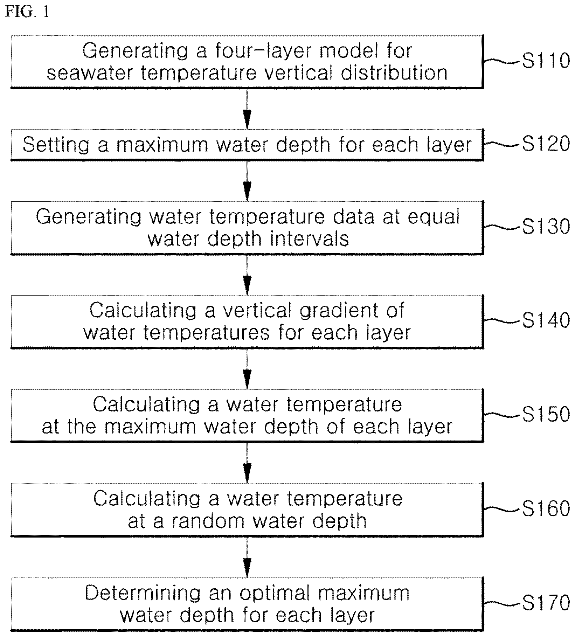

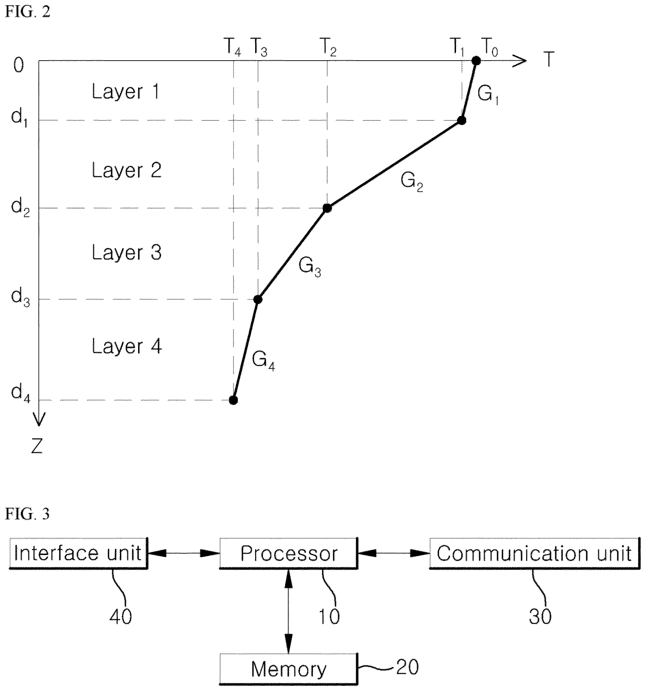

FIG. 1 is a flowchart schematically illustrating a method for determining water temperature at a random water depth using a seawater temperature vertical distribution stratum simulation model performed by an apparatus for determining water temperature at a random water depth in accordance with an embodiment of the present disclosure, and FIG. 2 is a diagram for describing the method for determining water temperature at a random water depth using a seawater temperature vertical distribution stratum simulation model in accordance with the embodiment of the present disclosure in FIG. 1. In the following, the method for determining water temperature at a random water depth using a seawater temperature vertical distribution stratum simulation model in accordance with an embodiment of the present disclosure will be described focusing on FIG. 1, but FIG. 2 will be referred to as well.

In step S110, an apparatus for determining water temperature at a random water depth generates a four-layer model for seawater temperature vertical distribution.

Referring to FIG. 2, the four-layer model may consist of four layers: a mixed layer (first layer), an upper thermocline (second layer), a lower thermocline (third layer), and a deep ocean layer (fourth layer). Here, the mixed layer is from the sea surface to a water depth of $d_1$, the upper thermocline is at a water depth of $d_1$ to $d_2$, the lower thermocline is at a water depth of $d_2$ to $d_3$, and the deep ocean layer is at a water depth of $d_3$ to $d_4$. In other words, the maximum water depths of the respective layers are $d_1$, $d_2$, $d_3$, and $d_4$. In addition, $T_1$, $T_2$, $T_3$, and $T_4$ are the water temperatures at the maximum water depths of the respective layers. Further, $G_1$, $G_2$, $G_3$, and $G_4$ are vertical gradients of the water temperatures in the respective layers.

For example, the vertical gradient $G_i$ of the water temperature in the i-th layer can be expressed by the following equation.

Equation 1

$$G_i = \left( \frac{\partial T}{\partial z} \right)^{(i)}$$

Here, z is the water depth, which increases as it gets deeper, and $T_0$ represents the sea surface water temperature (SST).

In step S120, the apparatus for determining water temperature at a random water depth sets a maximum water depth for each layer in the generated four-layer model.

In other words, the apparatus for determining water temperature at a random water depth may set them by receiving as input the initial set values for the maximum water depths $d_1$, $d_2$, $d_3$, and $d_4$ of the mixed layer (first layer), the upper thermocline (second layer), the lower thermocline (third layer), and the deep ocean layer (fourth layer) from a user.

In step S130, the apparatus for determining water temperature at a random water depth processes ocean observation data and generates water temperature data at equal water depth intervals.

Here, the ocean observation data generally includes water temperature data observed at standard water depths (0, 10, 20, 30, 50, 75, 100, 150, 200, 250, 300, 400, 500 m, etc.). If these ocean observation data are determined as parameters for the four-layer model, a bias phenomenon in which the upper layer data affects greatly occurs in model fitting because the data intervals are dense in the upper ocean layer and the data intervals are too large in the lower ocean layer. To overcome this problem, it is necessary to generate data at equal water depth intervals (e.g., 5 m intervals).

Thus, the apparatus for determining water temperature at a random water depth generates water temperature data at equal water depth intervals by linearly interpolating the water temperature data observed for each standard water depth.

In other words, the apparatus for determining water temperature at a random water depth generates an array at a preset equal water depth interval (e.g., a 5 m interval), writes a corresponding water temperature value to each grid in the array by referring to the water temperature data observed for each standard water depth, and writes water temperature values calculated by linearly interpolating the water temperature values of the preceding and succeeding grids to the grids that have not been written among the grids in the array.

In step S 140, the apparatus for determining water temperature at a random water depth calculates a vertical gradient of the water temperatures for the water depths of each layer of the four-layer model by using the generated water temperature data at equal water depth intervals.

In other words, the apparatus for determining water temperature at a random water depth may calculate a vertical gradient of the water temperatures for the water depths of each layer of the four-layer model by using a method of calculating the slope and intercept of the linear regression equation in the least squares method.

The linear regression equation can be expressed by the following equation.

Equation 2

$$T(z_i) = az_i + b$$

Here, a is the slope and b is the intercept.

When there are n observation values $T_i$ (i=1, ..., n) in any one of the four layers of the four-layer model, the sum of squared errors E between the observation value $T_i$ and the linear regression value $T(z_i)$ can expressed by the following equation.

Equation 3

$$E = \sum_{i=0}^{n} [ T_i - T(z_i) ]^2 = \sum_{i=0}^{n} [ T_i - az_i - b ]^2$$

The coefficients a and b that minimize the sum of squared errors are given as solutions to the minimization condition expressions as in the following equations.

Equation 4

$$\frac{\partial E}{\partial a} = -2 \sum_{i=0}^{n} z_i (T_i - az_i - b) = 0$$

$$\frac{\partial E}{\partial b} = -2 \sum_{i=0}^{n} (T_i - az_i - b) = 0$$

These minimization condition expressions can be expressed as a system of linear equations as in the following equations when arranged in equations of a and b.

Equation 5

$$a\sum z_i^2 + b\sum z_i = \sum z_i T_i$$

$$a\sum z_i + b\sum 1 = \sum T_i$$

Then, the solution to this system of linear equations can be expressed by the following equation.

Equation 6

$$a = \frac{\begin{vmatrix} \sum z_i T_i & \sum z_i \\ \sum T_i & \sum 1 \end{vmatrix}}{\begin{vmatrix} \sum z_i^2 & \sum z_i \\ \sum z_i & \sum 1 \end{vmatrix}} \qquad b = \frac{\begin{vmatrix} \sum z_i^2 & \sum z_i T_i \\ \sum z_i & \sum T_i \end{vmatrix}}{\begin{vmatrix} \sum z_i^2 & \sum z_i \\ \sum z_i & \sum 1 \end{vmatrix}}$$

Here, $z_i$ and $T_i$ are the water depth value and water temperature value of the generated water temperature data at equal water depth intervals, respectively, and $\sum$ represents the sum from i=1 to n. By using these, the vertical gradient $G_i$ (i=1, 2, 3, 4) of the water temperatures of each layer of the four-layer model may be calculated.

In step S 150, the apparatus for determining water temperature at a random water depth calculates a water temperature at the maximum water depth of each layer by using the set maximum water depth of each layer and the calculated vertical gradient.

In other words, the apparatus for determining water temperature at a random water depth may calculate a water temperature at the maximum water depth of each layer by using the following equations.

Equation 7

$$T_1 = T_0 + G_1 d_1$$

$$T_2 = T_1 + G_2 (d_2 - d_1)$$

$$T_3 = T_2 + G_3 (d_3 - d_2)$$

$$T_4 = T_3 + G_4 (d_4 - d_3)$$

In step S160, the apparatus for determining water temperature at a random water depth calculates a model water temperature at a random water depth by using the calculated vertical gradient and the water temperature at the maximum water depth of each layer.

In other words, the apparatus for determining water temperature at a random water depth may calculate a model water temperature at a random water depth by using the following equation.

Equation 8

$$T^{(1)}(z) = T_0 + G_1 z$$

$$T^{(2)}(z) = T_1 + G_2 (z - d_1)$$

$$T^{(3)}(z) = T_2 + G_3 (z - d_2)$$

$$T^{(4)}(z) = T_3 + G_4 (z - d_3)$$

Here, $T^{(i)}(z)$ (i=1, 2, 3, 4) represents a model water temperature for a random water depth z with the i-th layer indicated by a superscript.

For example, the apparatus for determining water temperature at a random water depth may receive the value of water depth z as input, identify which layer the input value of water depth z belongs to, substitute the value of water depth z into the equation corresponding to the identified layer, and calculate a model water temperature corresponding to the input value of water depth z.

In step S170, the apparatus for determining water temperature at a random water depth determines an optimal maximum water depth for each layer by using the generated water temperature data at equal water depth intervals and the calculated model water temperature at a random water depth.

In order for the model water temperature $T(z_i)$ calculated using the four-layer model to best match the observed water temperature $T_i$, optimal maximum water depths $d_1$, $d_2$, $d_3$, and $d_4$ must be selected.

An optimal maximum water depth of each layer must satisfy the condition that the variance of the following equation is minimized for all observed water temperatures.

Equation 9

$$var = \frac{1}{n} \sum_{i=0}^{n} [\, T_i - T(z_i) \,]^2$$

Alternatively, the condition that the RMS (root mean squares) error, which is the square root of the variance, is minimized must be satisfied.

The top of the first layer, which is the first layer in the four-layer model, is set to the sea surface (z=0), and the maximum water depth $d_4$ of the fourth layer, which is the lowest layer in the four-layer model, is set to the maximum water depth of the observed values. Accordingly, there are three values of the maximum water depths that must be corrected through iterations: $d_1$, $d_2$, and $d_3$. Considering the case where these three water depth values are shifted by $-\Delta z$, 0, and $\Delta z$, respectively, there are three values of the maximum water depths for the first layer: $d_1 - \Delta z$, $d_1$, and $d_1 + \Delta z$. If the second and third layers are also considered similarly, there arise $3^3$, or 27, cases in total. For each of these 27 water depth values, the RMS error between the model water temperature and the observed water temperature corresponding to the water depth value is calculated, and the water depth value with the smallest RMS error is selected. Then, the initial set values for the maximum water depths $d_1$, $d_2$, and $d_3$ of the first, second, and third layers are updated to the selected water depth values. This process is repeated a preset number of iterations to determine the optimal maximum water depth for each layer.

During the iterations, if the RMS error is less than a preset tolerance, an allowed preset number of iterations is exceeded, or the RMS error no longer decreases even after iterations, the iteration is stopped.

The resolution of the water depths of each layer by iterations is determined by the shifted value, $\Delta z$. In order to determine the optimal maximum water depth for each layer with sufficient precision, $\Delta z$ must be sufficiently small. For example, it may be set as $\Delta z = 0.1$ m.

However, since candidate water depth values for the maximum water depth of each layer are given by $d_i - \Delta z$, $d_i$, $d_i$

+Δz, only local fine tuning is achieved rather than global minimization convergence if Δz is small, which sometimes leads to a case where the desired result is not yielded. To overcome this problem, a multi-step iteration of first seeing the forest and then seeing the trees is desirable.

For example, in the first step, a general water layer structure is investigated through iterations by setting Δz = 5 m, and in the next step, a more detailed water layer structure is determined by setting Δz = 1 m. Finally, a method of determining a water layer structure with a resolution of 0.1 m by setting Δz = 0.1 m may be considered.

FIG. 3 is a diagram schematically illustrating the configuration of an apparatus for determining water temperature at a random water depth using a seawater temperature vertical distribution stratum simulation model in accordance with an embodiment of the present disclosure.

Referring to FIG. 3, an apparatus for determining water temperature at a random water depth using a seawater temperature vertical distribution stratum simulation model in accordance with an embodiment of the present disclosure includes a processor 10, a memory 20, a communication unit 30, and an interface unit 40.

The processor 10 may be a CPU or a semiconductor device that executes processing instructions stored in the memory 20.

The memory 20 may include various types of volatile or non-volatile storage media. For example, the memory 20 may include ROM, RAM, etc.

For example, the memory 20 may store instructions for performing the method for determining water temperature at a random water depth using a seawater temperature vertical distribution stratum simulation model in accordance with the embodiment of the present disclosure.

The communication unit 30 is a means for transmitting and receiving data to and from other devices over a communication network.

The interface unit 40 may include a network interface and a user interface for accessing the network.

On the other hand, the components of the embodiments described above can be readily understood from a process-wise perspective. In other words, each component can be understood as each process. Further, the processes of the embodiments described above can be readily understood from the perspective of the components of the apparatus.

Moreover, the technical contents described above may be implemented in the form of program instructions that can be executed via various computer means and recorded on a computer-readable medium. The computer-readable medium may include program instructions, data files, data structures, etc., alone or in combination. The program instructions recorded on the medium may be those specially designed and configured for the embodiments or may be those known and available to persons skilled in the art of computer software. Examples of the computer-readable recording media include magnetic media such as hard disks, floppy disks, and magnetic tapes, optical media such as CD-ROMs and DVDs, magneto-optical media such as floptical disks, and hardware devices specially configured to store and execute program instructions, such as ROM, RAM, flash memory, etc. Examples of the program instructions include not only machine language code, such as that created by a compiler, but also high-level language code that can be executed by a computer using an interpreter or the like. The hardware devices may be configured to operate as one or more software modules, and vice versa, to perform the operations of the embodiments.

The embodiments of the present disclosure described above have been disclosed for purposes of illustration, those skilled in the art who have common knowledge of the present disclosure will be able to make various modifications, changes, and additions within the spirit and scope of the present disclosure, and such modifications, changes, and additions should be considered as falling within the scope of the patent claims below.

**Claims**

1. A method for determining water temperature at a random water depth using a seawater temperature vertical distribution stratum simulation model, performed by an apparatus for determining water temperature at a random water depth, comprising:

   generating a four-layer model for seawater temperature vertical distribution;
   setting a maximum water depth for each layer in the generated four-layer model;
   generating water temperature data at equal water depth intervals by processing ocean observation data;
   calculating a vertical gradient of water temperatures for water depths of each layer in the four-layer model by using the generated water temperature data at equal water depth intervals;
   calculating a water temperature at the maximum water depth of each layer by using the set maximum water depth of each layer and the calculated vertical gradient; and
   calculating a model water temperature at a random water depth by using the set maximum water depth of each layer, the calculated vertical gradient, and the water temperature at the maximum water depth of each layer.

2. The method of claim 1, wherein the four-layer model consists of four layers: a first layer that is a mixed layer, a second layer that is an upper thermocline, a third layer that is a lower thermocline, and a fourth layer that is a deep ocean layer.

3. The method of claim 1, wherein the generating the water temperature data at equal water depth intervals generates the water temperature data at equal water depth intervals by linearly interpolating water temperature data observed for each standard water depth.

4. The method of claim 1, wherein the calculating the vertical gradient calculates the vertical gradient of the water temperatures for the water depths of each layer of the four-layer model by using a method of calculating a slope and an intercept of a linear regression equation in a least squares method.

5. The method of claim 1, wherein the calculating the water temperature at the maximum water depth of each layer calculates the water temperature at the maximum water depth of each layer by using the following equation:

$$T_1 = T_0 + G_1 d_1$$

$$T_2 = T_1 + G_2 (d_2 - d_1)$$

$$T_3 = T_2 + G_3 (d_3 - d_2)$$

$$T_4 = T_3 + G_4 (d_4 - d_3),$$

where $T_0$ is a sea surface water temperature (SST), $T_1$, $T_2$, $T_3$, and $T_4$ are water temperatures at maximum water depths of a first layer, a second layer, a third layer, and a fourth layer, respectively, $d_1$, $d_2$, $d_3$, and $d_4$ are the maximum water depths of the first layer, second layer, third layer, and fourth layer, respectively, and $G_1$, $G_2$, $G_3$, and $G_4$ are vertical gradients of water temperatures for water depths of the first layer, second layer, third layer, and fourth layer, respectively.

6. The method of claim 1, wherein the calculating the model water temperature at the random water depth calculates a water temperature at a random water depth by using the following equation:

$$T^{(1)}(z) = T_0 + G_1 z$$

$$T^{(2)}(z) = T_1 + G_2 (z - d_1)$$

$$T^{(3)}(z) = T_2 + G_3 (z - d_2)$$

$$T^{(4)}(z) = T_3 + G_4 (z - d_3),$$

where $T^{(i)}(z)$ (i=1, 2, 3, 4) represents a model water temperature for a random water depth z, $T_0$ is a sea surface water temperature (SST), $T_1$, $T_2$, $T_3$, and $T_4$ are water temperatures at maximum water depths of a first layer, a second layer, a third layer, and a fourth layer, respectively, $d_1$, $d_2$, $d_3$, and $d_4$ are the maximum water depths of the first layer, second layer, third layer, and fourth layer, respectively, and $G_1$, $G_2$, $G_3$, and $G_4$ are vertical gradients of water temperatures for water depths of the first layer, second layer, third layer, and fourth layer, respectively.

7. The method of claim 1, further comprising:
determining an optimal maximum water depth of each layer by using the generated water temperature data at equal water depth intervals and the calculated water temperature at the random water depth.

8. The method of claim 7, wherein the determining the optimal maximum water depth of each layer sets a maximum water depth of a fourth layer, which is a lowest layer of the four-layer model, to a maximum water depth of the water temperature data, shifts water depth values set as maximum water depths of a first layer, a second layer, and a third layer of the four-layer model by preset $-\Delta z$, 0, and $\Delta z$, respectively, calculates RMS (root mean squares) errors between model water temperatures corresponding to the shifted water depth values and observed water temperatures of the water temperature data, selects water depth values with a smallest RMS error, and updates the water depth values set as the maximum water depths of the first layer, second layer, and third layer to the selected water depth values.

9. An apparatus for determining water temperature at a random water depth using a seawater temperature vertical distribution stratum simulation model, comprising:

   a memory configured to store instructions; and
   a processor configured to execute the instructions,
   wherein the instructions perform a method for determining water temperature at a random water depth, the method comprising:

      generating a four-layer model for seawater temperature vertical distribution;
      setting a maximum water depth for each layer in the generated four-layer model;
      generating water temperature data at equal water depth intervals by processing ocean observation data;
      calculating a vertical gradient of water temperatures for water depths of each layer in the four-layer model by using the generated water temperature data at equal water depth intervals;
      calculating a water temperature at the maximum water depth of each layer by using the set maximum water depth of each layer and the calculated vertical gradient; and
      calculating a model water temperature at a random water depth by using the set maximum water depth of each layer, the calculated vertical gradient, and the water temperature at the maximum water depth of each layer.

FIG. 1

Generating a four-layer model for seawater temperature vertical distribution — S110

Setting a maximum water depth for each layer — S120

Generating water temperature data at equal water depth intervals — S130

Calculating a vertical gradient of water temperatures for each layer — S140

Calculating a water temperature at the maximum water depth of each layer — S150

Calculating a water temperature at a random water depth — S160

Determining an optimal maximum water depth for each layer — S170

FIG. 2

FIG. 3

Europäisches
Patentamt

European
Patent Office

Office européen
des brevets

# EUROPEAN SEARCH REPORT

**Application Number**

EP 24 19 4766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAEGER S D: "Vertical representation of ocean temperature profiles with a gradient feature model", CHALLENGES OF OUR CHANGING GLOBAL ENVIRONMENT'. CONFERENCE PROCEEDINGS. OCEANS '95 MTS/IEEE; 9-12 OCT. 1995; SAN DIEGO, CA, USA, IEEE, NEW YORK, NY, USA, vol. 1, 9 October 1995 (1995-10-09), pages 579-585, XP010197428, DOI: 10.1109/OCEANS.1995.526820 ISBN: 978-0-933957-14-5 * Sec. Introduction - Sec. Description of the gradient model; Sec. Spatial Variation of Subsurface Features; figures 2, 3 * | 1-9 | INV. G06F30/20  ADD. G01K7/42 G06F113/08 G06F119/08 |
| A | Stilgars ET AL: "Interpolation for unevenly spaced data points - Geographic Information Systems Stack Exchange", Geographic Information Systems, 20 February 2020 (2020-02-20), XP093234080, Retrieved from the Internet: URL:https://gis.stackexchange.com/questions/351196/interpolation-for-unevenly-spaced-data-points [retrieved on 2024-12-13] * the whole document * | 1-9 |  |

-/--

TECHNICAL FIELDS SEARCHED (IPC)

G06F
G01W
G01K

The present search report has been drawn up for all claims

| Place of search | Date of completion of the search | Examiner |
|---|---|---|
| Munich | 7 January 2025 | Lampmann, Arne |

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Germano Michell Fontenelle: "Piecewise Linear Regression Model. What Is It and When Can We Use It? ¦ by Michell Fontenelle Germano ¦ Towards Data Science", Towards Data Science, 31 December 2020 (2020-12-31), XP093234101, Retrieved from the Internet: URL:https://towardsdatascience.com/piecewise-linear-regression-model-what-is-it-and-when-can-we-use-it-93286cfee452 [retrieved on 2024-12-13] * the whole document * | 1-9 | |

- - - - -

**TECHNICAL FIELDS SEARCHED (IPC)**

The present search report has been drawn up for all claims

| Place of search | Date of completion of the search | Examiner |
|---|---|---|
| Munich | 7 January 2025 | Lampmann, Arne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

**EP 4 538 921 A1**

**Patent documents cited in the description**

- KR 1020230135875
- KR 1020230055765